(19) Europäisches Patentamt / European Patent Office / Office européen des brevets

(11) **EP 2 738 057 B1**

(12) **FASCICULE DE BREVET EUROPÉEN**

(45) Date de publication et mention
de la délivrance du brevet:
**06.05.2015 Bulletin 2015/19**

(21) Numéro de dépôt: **13195068.5**

(22) Date de dépôt: **29.11.2013**

(51) Int Cl.:
*B60T 17/22* (2006.01)      *B60T 8/1755* (2006.01)
*B60T 13/66* (2006.01)      *B60T 8/40* (2006.01)
*B60T 7/04* (2006.01)      *B60T 13/68* (2006.01)

(54) **Système de détermination de la viscosité du liquide de frein dans un circuit de frein**

System für die Ermittlung der Viskosität einer Bremsflüssigkeit in einem Bremskreis

System for determining the viscosity of a brake fluid in a braking circuit

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.11.2012 FR 1261401**

(43) Date de publication de la demande:
**04.06.2014 Bulletin 2014/23**

(73) Titulaire: **ROBERT BOSCH GMBH
70442 Stuttgart (DE)**

(72) Inventeur: **Pinard, Cédric
94500 CHAMPIGNY SUR MARNE (FR)**

(56) Documents cités:
**WO-A1-00/55021      WO-A1-2010/139626**

EP 2 738 057 B1

**Description**

**Domaine de l'invention**

La présente invention se rapporte à un système d'estimation de la viscosité du liquide de frein dans un circuit de frein comprenant :

- un maître-cylindre avec un piston principal, alimenté à partir d'un réservoir de liquide de frein et commandant les circuits de frein, et
- un simulateur de sensation de pédale interposé entre le piston principal du maître-cylindre et la pédale de frein, ayant un piston intermédiaire logé dans une chambre de simulation, dans l'axe de la tige du piston principal mais séparé de celui-ci et avec lequel le piston de simulateur n'arrive en contact pour actionner directement le piston principal qu'en cas de défaillance de l'amplificateur de force de freinage actionnant normalement le piston principal pour l'assistance au freinage,
- la chambre de simulation étant en communication avec une capsule de simulation reliée hydrauliquement à la chambre de simulation et fournissant la pression hydraulique appliquée au piston intermédiaire et à la pédale de frein pour générer la sensation de pédale,

**Etat de la technique**

Les systèmes de freinage de véhicule assurent de plus en plus de fonctions et de possibilités développées pour la sécurité et en particulier les systèmes ESP. Mais la gestion de ces systèmes et l'élaboration des commandes dépend d'un certain nombre de para-mètres et en particulier la température extérieure ou la température de fonctionnement qui varient en cours de fonctionnement ou pendant l'utilisation du système de frein.

En particulier, pour commander le générateur de pression qui alimente le maître-cylindre commandant lui-même la pression exercée au niveau des freins de roues, il est nécessaire d'évaluer la pression aux roues à partir de modèles. Pour cela, on utilise des modèles préétablis, par exemple sur un banc d'essai, ces modèles tiennent compte de la température du bloc hydraulique qui lui-même influence la viscosité du liquide de frein. Or, la viscosité d'un liquide de frein n'est connue que comme viscosité du liquide frais alors que cette viscosité peut évoluer très fortement même pour de faibles différences de tempé- rature et cet effet est d'autant plus accentué si l'on se rapproche des températures extrêmes tant dans le froid que dans le chaud. Dans ces conditions, on ne connaît pas la viscosité réelle du liquide à un instant donné de sorte que le résultat de la commande est nécessairement faussé, ce qui est d'autant plus grave que le système de frein est un élément déterminant de la sécurité du véhicule.

En outre, ces systèmes ne tiennent pas compte du vieillissement du liquide de frein qui modifie les caractéristiques.

**But de l'invention**

La présente invention a pour but de développer un système permettant de déterminer de façon précise la viscosité du liquide de frein à tout instant par un contrôle permanent ou répété, cela quelque soit le liquide de frein ou le remplacement de liquide de frein.

**Exposé et avantages de l'invention**

A cet effet, l'invention a pour objet un système un capteur de pression détectant la pression dans la chambre de simulation et un capteur de vitesse de déplacement détectant la vitesse de déplacement de la tige du piston intermédiaire pour calculer le débit de liquide refoulé de la chambre de simulation par l'avancée du piston intermédiaire vers la capsule, la pression détectée et la vitesse détectée servant à calculer la viscosité v à cet instant selon la fonction v = f($\Delta$P, Q) dans laquelle :

    $\Delta$P est la différence de pression mesurée,
    Q est le débit de liquide de frein proportionnel à la vitesse de déplacement de la tige du piston intermédiaire.

Le système selon l'invention permet de déterminer la viscosité du liquide de frein et de tenir compte ainsi de l'évolution de cette viscosité en fonction de la température, du vieillissement du liquide ou de son remplacement par un liquide de frein ayant d'autres caractéristiques, sans qu'il soit nécessaire de déterminer à chaque fois séparément la viscosité, d'autant plus qu'une telle détermination de viscosité par une mesure de viscosité est difficilement réalisable par les moyens connus sur un véhicule en cours de fonctionnement.

Le système selon l'invention a l'avantage de ne pas modifier le circuit ou système de frein et d'utiliser les équipements déjà existants. Le système permet de modéliser les phénomènes hydrauliques de perte de charge sans générer d'erreurs liées aux changements à court ou long terme des caractéristiques du liquide de frein.

Suivant une autre caractéristique avantageuse, la chambre de simulation est reliée à la capsule de simulation par une conduite munie d'une valve fermant cette conduite ou l'ouvrant pour le fonctionnement normal de simulation.

Suivant une autre caractéristique avantageuse, la conduite est équipée du capteur de pression et suivant une autre caractéristique avantageuse, cette conduite est reliée à la conduite débouchant dans la chambre du maître-cylindre munie d'une valve d'arrêt pour isoler l'ensemble constitué par la chambre de simulation, la conduite et la capsule de simulation pendant le fonctionnement normal.

Le jeu des valves fermant ou ouvrant la conduite pour le fonctionnement normal de simulation ou pour la mise en communication du système de simulation avec le restant du circuit de frein et en particulier avec le réservoir de liquide de frein permet pendant les phases de non freinage d'assurer le remplissage du système de simulation ou pour le freinage de secours de neutraliser le système de simulation pour que la pédale de frein puisse agir directement sur le maître-cylindre en cas de défaillance de la l'assistance.

## Dessins

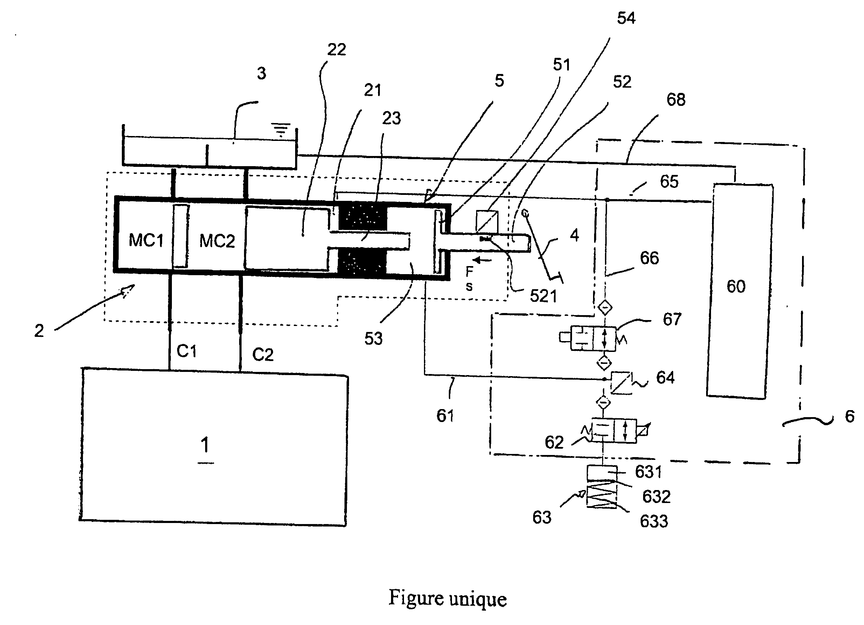

La présente invention sera décrite ci-après de manière plus détaillée à l'aide d'un exemple de système d'estimation de la viscosité du liquide de frein dans un circuit de frein représenté dans le dessin annexé dans lequel :

- la figure est un schéma d'un circuit de frein pour la mise en oeuvre du système selon l'invention.

## Description de modes de réalisation de l'invention

Selon la figure, l'invention concerne un circuit de frein représenté schématiquement, se composant, outre de la partie 1 du circuit de freins reliée aux freins de roues, d'un maître-cylindre 2 (ici un maître-cylindre tandem) alimenté en liquide de frein à partir d'un réservoir de liquide de frein 3 et commandé par le module de commande hydraulique 6 comportant un générateur de liquide de frein sous pression 61 alimentant la chambre de commande 21 du maître-cylindre 2. Le déclenchement d'une action de freinage se fait à partir de la pédale de frein 4 qui agit sur le poussoir 52 d'un piston 51 de simulateur de sensation de pédale 5, logé dans une chambre de simulation 53. La tige 23 du piston principal 22 du maître-cylindre 2 débouche également dans cette chambre de simulation 53 sans toutefois être normalement en contact avec le piston 51 du simulateur 5.

La chambre de simulation 53 reliée par une conduite 61 à une capsule de simulation 63 à travers une électrovalve 62 faisant partie du module de commande hydraulique 6. La conduite 61 est équipée d'un capteur de pression 64. Le générateur de liquide sous pression 60 est relié au réservoir 3 par une conduite 68 et à la chambre de commande 21 par une conduite 65 reliée par une conduite 66 munie d'une valve d'arrêt 67 à la conduite 61. Le déplacement du piston de simulateur 51 est détecté par un capteur de course ou de vitesse de déplacement 54 coopérant avec un élément émetteur 521 porté par la tige 52 du piston 51.

L'actionnement du piston 51 par la pédale de frein 4, sous l'effet du pied du conducteur produit son déplacement qui est détecté par le capteur 54. Ce dernier commande le générateur de liquide sous pression 60 pour alimenter la chambre 21 du piston principal et du piston secondaire qui avancent et refoulent le liquide de frein sous pression dans les circuits de freins C1, C2 à partir des chambres MC1, MC2 du maître-cylindre tandem 2. Dans ces conditions de fonctionnement normal, le déclenchement du générateur de liquide sous pression 60 est assuré de façon que le piston de simulation 51 n'arrive pas en contact avec la tige 23 du piston principal 22. Cette séparation est réalisée par la présence du liquide sous pression dans la chambre de simulation 53 qui est certes refoulé de la chambre 53 mais la quantité refoulée est très faible et n'est pas suffisante pour que le piston 51 risque de toucher la tige 23. En effet, le liquide est mis sous pression dans la chambre de simulation 53 dès que la pédale de frein 4 est actionnée car le module de commande 6 ferme la valve 67 et ouvre la valve 62. La chambre 53 communique alors par la conduite 61 avec la capsule de simulation 63 qui est une capsule de type manométrique constituée par une chambre 631 reliée à la conduite 61 et délimitée par un piston 632 poussé par un ressort 633 créant la poussée antagoniste s'opposant à la colonne de liquide refoulé de la chambre 53 par l'avancée du piston 51. On crée ainsi une réaction s'opposant à l'avancée du piston 51 ; cette réaction est transmise par la tige 52 à la pédale 4 et constitue la « sensation de pédale » perçue par le pied du conducteur.

Les caractéristiques de la montée en pression dépendent notamment des caractéristiques du ressort 633 de la capsule de simulation 63. En d'autres termes, la pression engendrée dans la chambre de simulation 53 donne au conducteur qui appuie sur la pédale de frein 4, l'impression que par la pédale, il agit directement sur le maître-cylindre 2 alors que le piston intermédiaire 51 est mécaniquement séparé du piston principal 21 du maître-cylindre 2.

Ce n'est qu'en cas de défaillance du générateur de liquide de frein 60 que le module de commande 6 ferme la valve 62 et ouvre la valve 67 de sorte que le liquide de frein puisse sortir de la chambre 53 et permettre au piston 51 de pousser directement et librement la tige 23 du piston principal 22 sans être empêchée par un volume de liquide par nature incompressible. Ainsi, comme il n'y a pas de liquide sous pression dans la chambre de simulation 53, le piston de simulation 51, poussé par la pédale 4 et qui, alors refoule du liquide de la chambre de simulation 53 peut avancer librement et arrive au contact de la tige 23 du piston principal 22 qu'il repousse par la seule force exercée par le conducteur sur la pédale 4. Cette situation est celle du freinage de secours.

Selon l'invention, la viscosité du liquide de frein dans la chambre 53, la conduite 61 et la capsule de simulation 63 se détermine à l'aide des informations fournies par le capteur de vitesse de déplacement 54 et le capteur de pression 64 pendant le fonctionnement normal du système de frein.

La vitesse de déplacement du piston 51 multipliée par sa section donne le débit de liquide dans la conduite 61. L'action de la pression du liquide de la chambre 53 ou le mouvement de la tige 23 du piston principal 21 n'influencent pas le volume de la chambre 53 ou du moins seulement de manière négligeable par rapport au mouvement du piston 51.

Selon l'invention, le capteur de vitesse de déplacement 54 qui détecte la vitesse de déplacement c'est-à-dire la vitesse d'actionnement du piston intermédiaire 51 transmet cette vitesse à un circuit de gestion faisant par exemple partie du module 6 qui transforme cette vitesse en un débit volumique de liquide refoulé de la chambre de simulation 53 vers la capsule de simulation 63 puisque la section du piston 51 est connue. Par une simple multiplication, on connaît le débit de liquide ainsi provoqué par la commande de la pédale de frein 4, en direction de la capsule 63.

Le capteur de pression 64 capte la pression dans la chambre 631 et plus simplement en un point quelconque de la conduite 61 et transmet ce signal au circuit de gestion.

Selon l'invention, à partir de la formule de Bernoulli qui donne le débit à travers un orifice en fonction de la hauteur de la colonne de liquide derrière l'orifice, c'est-à-dire la pression ou la différence de pression exercée sur le liquide, on obtient la formule suivante :

$$\Delta P = \rho \cdot v \cdot \left(\sum \frac{128 L_i}{\pi D_i^4}\right) \cdot Q + \rho \cdot \left(\sum \frac{8 K_i}{\pi^2 D_i^4}\right) \cdot Q^2$$

qui relie la différence de pression P aux variables et paramètres suivants :

p Densité du liquide
v Viscosité du liquide
Di Diamètre de la conduite i
Li Longueur de la conduite i

Comme le diamètre et la longueur sont des éléments physiques, invariables du système hydraulique, cette formule se simplifie comme suit :

$$\Delta P = \rho v A \cdot Q + \rho B \cdot Q^2$$

Dans cette formule, A et B sont des constantes et $\Delta P$, p, v, et Q ont la signification déjà donnée ci-dessus.

Ainsi, connaissant la densité du liquide hydraulique, en mesurant la différence de pression $\Delta P$ et le débit Q, on obtient la viscosité du liquide dans le système hydraulique.

Cette formule donne la viscosité comme suit :

$$\Delta P = \frac{\Delta P - \rho B Q^2}{\rho A Q}$$

Par des essais, on détermine les coefficients A et B du circuit hydraulique de sorte que l'on peut mesurer la viscosité par une mesure de différence de pression P et une mesure de débit Q.

En résumé, la viscosité est ainsi une fonction de la différence de pression $\Delta P$ et du débit du liquide Q, ce qui peut s'écrire comme suit :

$$v = f(\Delta P, Q).$$

Dans le système de la figure, le débit Q est égal à la vitesse de déplacement du piston intermédiaire 51 ou vitesse de déplacement de sa tige de piston 52 multipliée par la section du piston. La vitesse V du piston 51 est donc égale à un coefficient près au débit de liquide hydraulique Q refoulé de la chambre de simulation 53 dans la conduite 61 et vers la capsule 63.

La différence de pression ΔP est la différence de pression entre le système au repos (pression dans les conduites 65, 66, la valve 67 étant ouverte au repos/non freinage) et le système actionné par la commande de la pédale. Il s'agit en fait de la pression mesurée par le capteur de pression 64.

La détermination de la viscosité se fait indépendamment de la température qui n'intervient pas explicitement dans le calcul et qu'il n'est pas nécessaire de déterminer.

La viscosité du liquide dans la conduite 61 ou dans les chambres 53 ou 631 est représentative de la viscosité du liquide du système de freins car le liquide de frein est libre de circuler dans tous les circuits du système de frein au repos (absence de freinage) car les valves 62, 67 sont ouvertes et les conduites 65, 66, 68 communiquent librement entre elles et avec les autres parties du système et notamment avec le réservoir 3. Cette communication se fait également avec le maître-cylindre, les circuits C1, C2, la partie 1 du circuit et le générateur de liquide sous pression 60.

NOMENCLATURE

| | |
|---|---|
| 1 | Partie des circuits de frein reliée au frein de roue |
| 2 | Maître-cylindre |
| 20, 21 | Chambre du piston principal |
| 22 | Piston principal |
| 23 | Tige du piston principal |
| 3 | Réservoir de liquide de frein |
| 4 | Pédale de frein |
| 5 | Simulateur de sensation de pédale |
| 51 | Piston du simulateur |
| 52 | Tige du piston de simulateur |
| | 521 Elément émetteur |
| 53 | Chambre du simulateur |
| 6 | Module de commande hydraulique |
| 60 | Générateur de liquide hydraulique sous pression |
| 61 | conduite |
| 62 | Valve du simulateur/ électrovalve |
| 63 | Capsule de simulation |
| | 631 Chambre |
| | 632 Piston |
| | 633 Ressort |
| 64 | Capteur de pression de la conduite 61 |
| 65 | Conduite vers le maître-cylindre |
| 66 | Conduite |
| 67 | Valve d'arrêt/électrovalve |
| 68 | Conduite de retour vers le réservoir 3 |
| C1, C2 | Circuits de frein |
| MC1 | Première chambre du maître-cylindre tandem |
| MC2 | Seconde chambre du maître-cylindre tandem |
| V | vitesse du piston intermédiaire |
| ΔP | différence de pression |

**Revendications**

1.  Système d'estimation de la viscosité du liquide de frein dans un circuit de frein comprenant :

    - un maître-cylindre (2) avec un piston principal (22), alimenté à partir d'un réservoir de liquide de frein (3) et commandant les circuits (C$_1$,C$_2$) de frein, et
    - un simulateur de sensation de pédale (5) interposé entre le piston principal (22) du maître-cylindre (2) et la pédale de frein (4), ayant un piston intermédiaire (51) logé dans une chambre de simulation (53), dans l'axe de la tige (23) du piston principal (22) mais séparé de celui-ci et avec lequel le piston de simulateur (51) n'arrive en contact pour actionner directement le piston principal (22) qu'en cas de défaillance de l'amplificateur de force de freinage actionnant normalement le piston principal pour l'assistance au freinage,
    - la chambre de simulation (53) étant en communication avec une capsule de simulation (63) reliée hydrauliquement à la chambre de simulation (53) et fournissant la pression hydraulique appliquée au piston intermédiaire (51) et à la pédale de frein (4) pour générer la sensation de pédale,

    **caractérisé par**
    un capteur de pression (64) détectant la pression dans la chambre de simulation (53) et un capteur de vitesse de déplacement (54) détectant la vitesse de déplacement de la tige (52) du piston intermédiaire (51) pour calculer le débit de liquide (Q) refoulé de la chambre de simulation (53) par l'avancée du piston intermédiaire (51) vers la capsule (63), la pression ($\Delta$P) détectée et la vitesse détectée (Q) servant à calculer la viscosité v à cet instant selon la fonction v = f($\Delta$P, Q) dans laquelle :

    $\Delta$P est la différence de pression mesurée,
    Q est le débit de liquide de frein proportionnel à la vitesse de déplacement de la tige du piston intermédiaire.

2.  Système d'estimation de la viscosité du liquide de frein selon la revendication 1,
    **caractérisé en ce que**
    la chambre de simulation (53) est reliée à la capsule de simulation (63) par une conduite (61) munie d'une valve (62) fermant cette conduite ou pour le fonctionnement normal de simulation et l'ouvrant en-dehors du freinage ou pendant.

3.  Système d'estimation de la viscosité du liquide de frein selon la revendication 2,
    **caractérisé en ce que**
    le capteur de pression (64) équipe la conduite (61).

4.  Système d'estimation de la viscosité du liquide de frein selon la revendication 2,
    **caractérisé en ce que**
    la conduite (61) est reliée par une conduite (66) à la conduite (65) débouchant dans la chambre (21) du maître-cylindre, cette conduite (66) étant munie d'une valve d'arrêt (67) pour isoler l'ensemble constitué par la chambre de simulation (63), la conduite (61) et la capsule de simulation (63) pendant le fonctionnement normal du système de freins.

**Patentansprüche**

1.  System zur Schätzung der Viskosität der Bremsflüssigkeit in einem Bremskreis, das Folgendes umfasst:

    - ein Hauptbremszylinder (2) mit einem Hauptkolben (22), der von einem Bremsflüssigkeitsreservoir (3) gespeist wird und die Bremskreise (C$_1$, C$_2$) steuert, und
    - einen Pedalgefühlssimulator (5), der zwischen dem Hauptkolben (22) des Hauptbremszylinders (2) und dem Bremspedal (4) eingeschoben ist und einen Zwischenkolben (51) aufweist, der in einer Simulationskammer (53) auf der Achse der Stange (23) des Hauptkolbens (22), jedoch getrennt von dieser untergebracht ist, und mit der der Simulatorkolben (51) in Kontakt kommt, um den Hauptkolben (22) im Falle eines Ausfalls des Bremskraftverstärkers, der normalerweise zur Bremsunterstützung auf den Hauptkolben einwirkt, direkt zu betätigen,
    - wobei die Simulationskammer (53) in Kommunikation mit einer Simulationskapsel (63) ist, die hydraulisch mit der Simulationskammer (53) verbunden ist und den Hydraulikdruck liefert, der auf den Zwischenkolben (51) und das Bremspedal (4) angewendet wird, um das Pedalgefühl zu erzeugen,

**gekennzeichnet durch**

einen Drucksensor (64), der den Druck in der Simulationskammer (53) erfasst, und einen Verschiebungsgeschwindigkeitssensor (54), der die Verschiebungsgeschwindigkeit der Stange (52) des Zwischenkolbens (51) erfasst, um den Durchsatz (Q) der Flüssigkeit in der Simulationskammer (53), die durch Vorschub des Zwischenkolbens (51) gegen die Kapsel (63) verdrängt wird, zu berechnen, wobei der erfasste Druck (ΔP) und die erfasste Geschwindigkeit (Q) zum Berechnen der Viskosität v zu diesem Zeitpunkt gemäß der Funktion v = f(ΔP, Q) dient, in der:

ΔP die gemessene Druckdifferenz ist,

Q der Bremsflüssigkeitsdurchsatz proportional zu der Verschiebungsgeschwindigkeit der Stange des Zwischenkolbens ist.

2. System zur Schätzung der Viskosität der Bremsflüssigkeit nach Anspruch 1,
**dadurch gekennzeichnet, dass**
die Simulationskammer (53) mit der Simulationskapsel (63) durch eine Leitung (61) verbunden ist, die mit einem Ventil (62) ausgestattet ist, das diese Leitung schließt oder für die normale Simulationsfunktion und außerhalb des Bremsens oder währenddessen öffnet.

3. System zur Schätzung der Viskosität der Bremsflüssigkeit nach Anspruch 2,
**dadurch gekennzeichnet, dass**
der Drucksensor (64) die Leitung (61) ausrüstet.

4. System zur Schätzung der Viskosität der Bremsflüssigkeit nach Anspruch 2,
**dadurch gekennzeichnet, dass**
die Leitung (61) durch eine Leitung (66) mit der Leitung (65), die in der Kammer (21) des Hauptbremszylinders mündet, verbunden ist, wobei diese Leitung (66) mit einem Sperrventil (67) ausgestattet ist, um die Einheit, die von der Simulationskammer (53), der Leitung (61) und der Simulationskapsel (63) gebildet wird, während des Normalbetriebs des Bremssystems zu isolieren.

**Claims**

1. System for estimating the viscosity of the brake fluid in a brake circuit comprising:

- a master cylinder (2) with a main piston (22) supplied from a brake fluid reservoir (3) and controlling the brake circuits ($C_1$, $C_2$) and
- a pedal feel simulator (5) interposed between the main piston (22) of the master cylinder (2) and the brake pedal (4), having an intermediate piston (51) housed in a simulation chamber (53), on the axis of the rod (23) of the main piston (22) but separated therefrom and with which the simulator piston (51) does not come into contact in order to actuate the main piston (22) directly unless the brake force booster that normally actuates the main piston to boost the braking fails,
- the simulation chamber (53) being in communication with a simulation capsule (63) hydraulically connected to the simulation chamber (53) and providing the hydraulic pressure applied to the intermediate piston (51) and to the brake pedal (4) to generate the pedal feel,

**characterized by**
a pressure sensor (64) detecting the pressure in the simulation chamber (53) and a speed-of-movement sensor (54) detecting the speed at which the rod (52) of the intermediate piston (51) moves so as to calculate the flow rate (Q) of liquid delivered from the simulation chamber (53) by the forward movement of the intermediate piston (51) towards the capsule (63), the detected pressure (ΔP) and the detected speed (Q) serving to calculate the viscosity v at this instant using the function v = f(ΔP, Q) in which:

ΔP is the measured pressure difference,
Q is the flow rate of brake fluid proportional to the speed at which the rod of the intermediate piston moves.

2. System for estimating the viscosity of the brake fluid according to Claim 1,
**characterized in that**
the simulation chamber (53) is connected to the simulation capsule (63) by a pipe (61) fitted with a valve (62) closing this pipe or for normal simulation operation and opening it outside of braking or during.

3. System for estimating the viscosity of the brake fluid according to Claim 2,
   **characterized in that**
   the pressure sensor (64) is fitted to the pipe (61).

4. System for estimating the viscosity of the brake fluid according to Claim 2,
   **characterized in that**
   the pipe (61) is connected by a pipe (66) to the pipe (65) leading into the chamber (21) of the master cylinder, this pipe (66) being fitted with a shut-off valve (67) to isolate the assembly consisting of the simulation chamber (53), the pipe (61) and the simulation capsule (63) during normal operation of the braking system.

Figure unique